# EUROPEAN PATENT SPECIFICATION

(11) **EP 1 399 334 B1**
(45) Date of publication and mention of the grant of the patent: **24.10.2018**
(21) Application number: 02778914.8
(22) Date of filing: 26.04.2002
(51) Int. Cl.: B60R 16/02, B60H 1/00, B60K 35/00

(54) **COMBINATION INSTRUMENT**
KOMBINATIONSGERÄT
INSTRUMENT MIXTE

(30) Priority: 12.06.2001 SE 0102114
(43) Date of publication of application: 24.03.2004
(73) Proprietor: Volvo Truck Corporation, 405 08 Göteborg (SE)
(72) Inventor: OLSSON, Leif, 413 21 Göteborg (SE)
(74) Representative: Volvo Technology Corporation
(86) International application number: PCT/SE2002/000829
(87) International publication number: WO 2002/100687

(56) References cited:
- DE-U1- 29 604 717
- GB-A- 2 323 682
- US-A- 5 555 502
- US-A- 6 131 060

## Description

### TECHNICAL FIELD:

The present invention relates to a combination instrument with integrated means of control for a separate unit, for example an auxiliary heater, according to the preamble to claim 1, and a method for controlling a separate unit, for example an auxiliary heater, according to the preamble to claim 8.

### BACKGROUND ART:

In modern vehicles there are many functions that are controlled electrically. Some of these functions are of the type that are on or off and require no other control than a simple switch, for example certain lamps. Some functions, on the other hand, can have several settings and/or can be programmed in various ways, for example windscreen wipers. The control of these functions is carried out by some form of switch with several positions or by a separate control unit in which control and programming are carried out. Usually, switches of the low-current type are connected to a power unit, for example a relay, that can handle the current required.

A function that can be programmed and that is often found in particular in vehicles for commercial use is an auxiliary heater that can provide heat even when the vehicle's engine is switched off. The heater is usually powered by the same fuel as the vehicle, for example petrol or diesel. In order to make the heater more flexible, it is often equipped with a separate control unit in the form of a clock/timer that makes it possible to set, for example, start time, operating time and stop time. This clock/timer is a separate control unit that is supplied by the manufacturer of the heater.

Such a control device for an auxiliary heater is described in EP 0779169 B1. In this, a control unit for an auxiliary heater is described, the control unit consisting of a first and a second control unit, a time-setting module, a time signal generator and a clock display. The control unit is designed to be programmed by remote control. The first control unit contains switches for switching the auxiliary heater on and off and for initializing the programming of the control unit. The time signal generator is shared by the control unit and the vehicle's ordinary clock.

Other similar control systems for an auxiliary heater are described in EP 0780252 A2 and in WO 92/01249.

In a multimedia information and control system for use in an automobile, at least one interface is employed which enables a user to access information concerning the automobile and control vehicle functions in an efficient manner. Accordingly, US6131060 describes an information and control system with a display which may control various in-vehicle parts and accessories, such as climate controls or audio systems, but is not part of the dashboard and also does not comprise any vehicle driving relevant features. The information and control system of US6131060 only contains visual information on how the dashboard of the vehicle looks like, where speedometer, tachometer etc. are arranged, and information on what the displayed parts of the dashboard may be used for.

Although these control systems can work in certain situations, they have a number of disadvantages.
Firstly, the user interface in the control unit is completely different to the user interface for most of the other functions in the vehicle.
Secondly, the user interface is unnecessarily complicated and difficult to understand, as the control unit has a small display and a small number of programming buttons.
Thirdly, the time must be set separately on the control unit.
Fourthly, the control unit takes up extra space on the dash board.
Fifthly, it is difficult to locate the unit in a position that is easy to reach.
Seventhly, a separate control unit is unnecessarily expensive.
Eigthly, a separate control unit does not fit into the design of the vehicle.
Ninethly, it is unnecessarily complicated to upgrade the software in a separate control unit.

### DISCLOSURE OF INVENTION:

The object of the invention is therefore to achieve a combination instrument with integrated means of control for a separate unit, for example an auxiliary heater, which is as simple and cheap as possible and which is also as simple as possible to use, and a method for controlling a separate unit, for example an auxiliary heater, from a combination instrument in as simple a way as possible.

The solution to this problem according to the invention is described in the characterizing part of claim 1 regarding the system and in the characteristics in claim 10 regarding the method. The other claims contain advantageous further developments of the system according to the invention (claims 2 to 9) and of the method according to the invention (claims 11 to 16).

With a combination instrument for a motor vehicle, comprising means for giving messages to an operator, means for receiving messages from an operator, a control system and a menu system, the problem dealt with by the invention is solved by the combination instrument comprising a means of control integrated in the combination instrument for activating and/or deactivating a separate unit.

The method according to the invention solves the problem by means of the steps of selecting the function for the separate unit in a menu system, of activating or deactivating the separate unit in the said function and of terminating the function for the separate unit.

By means of this first embodiment of the combination instrument according to the invention, it is possible to switch a separate unit, for example an auxiliary heater, on and off using the combination instrument. The advantage of this is that it is possible to control an auxiliary heater without a special separate control unit.

In an advantageous first further development of the combination instrument according to the invention, it is possible to program switching a separate unit, for example an auxiliary heater, on and off using the combination instrument. The advantage of this is that the switching on or off of the auxiliary heater can be programmed in advance.

In an advantageous second further development of the combination instrument according to the invention, the combination instrument comprises a thermostat function. The advantage of this is that the required temperature in the vehicle can be controlled without a separate control unit.

In an advantageous third further development of the combination instrument according to the invention, it is possible to program in at least one combination of time and temperature using the combination instrument. The advantage of this is that it is possible to set different temperatures for different times in advance.

In an advantageous fourth further development of the combination instrument according to the invention, the combination instrument comprises a thermostat function which regulates the temperature in the vehicle using a internal temperature sensor and an external temperature sensor. The advantage of this is that the temperature in the vehicle can be regulated more accurately and more quickly.

In an advantageous fifth further development of the combination instrument according to the invention, it is possible to activate/deactivate the separate unit, for example the auxiliary heater, by means of an additional switch. The advantage of this is that the auxiliary heater can be switched on and off from several locations in the vehicle.

In an advantageous sixth further development of the combination instrument according to the invention, the combination instrument's thermostat function also controls an air-conditioning device. The advantage of this is that a set temperature can be maintained in the vehicle even if the external temperature is higher than the required set temperature.

A method according to the invention for controlling a separate unit, for example an auxiliary heater, using a means of control and menu system integrated in a combination instrument comprises the steps:
- of selecting the function "separate unit" in a menu system,
- of activating or deactivating the separate unit in the said function and
- of terminating the function "separate unit" by means of an escape function.

The advantage of this method is that the same user interface that is used for the vehicle's other functions can be used for the separate unit.

In an advantageous first further development of the method according to the invention, the method comprises the step of programming at least one time for activating and/or deactivating the separate unit. The advantage of this is that the switching on and off of, for example, an auxiliary heater can be programmed in advance.

In an advantageous second further development of the method according to the invention, the method comprises the step of setting a combination of time and temperature. The advantage of this is that different temperatures can be obtained at different times.

In an advantageous third further development of the method according to the invention, the method comprises the step of receiving a control signal from an additional switch. The advantage of this is that an additional switch can be used, for example, for switching an auxiliary heater on or off.

### BRIEF DESCRIPTION OF DRAWINGS

The invention will be described in greater detail in the following with reference to embodiments that are shown in the attached drawings, in which
Figure 1 shows an existing combination instrument and
Figure 2 shows a combination instrument according to the invention.

### DESCRIPTION OF EMBODIMENTS

The embodiments of the invention with further developments described in the following are only to be regarded as examples and in no way limit the extent of the protection afforded by the patent claims. In the embodiments described here, the same reference numbers in the different figures refer to the same type of component. Each component is therefore not described in detail in all the embodiments.

In the following examples, a parking heater is used as an example of a separate unit. It is, however, to be understood that a separate unit can comprise all types of device that it is possible to control electrically. Not only all types of auxiliary heaters that can be installed in vehicles, but also air-conditioning devices, electrically-operated windows, electrically-operated sunroofs, electrical fans, lamps, etc, are included in the term.

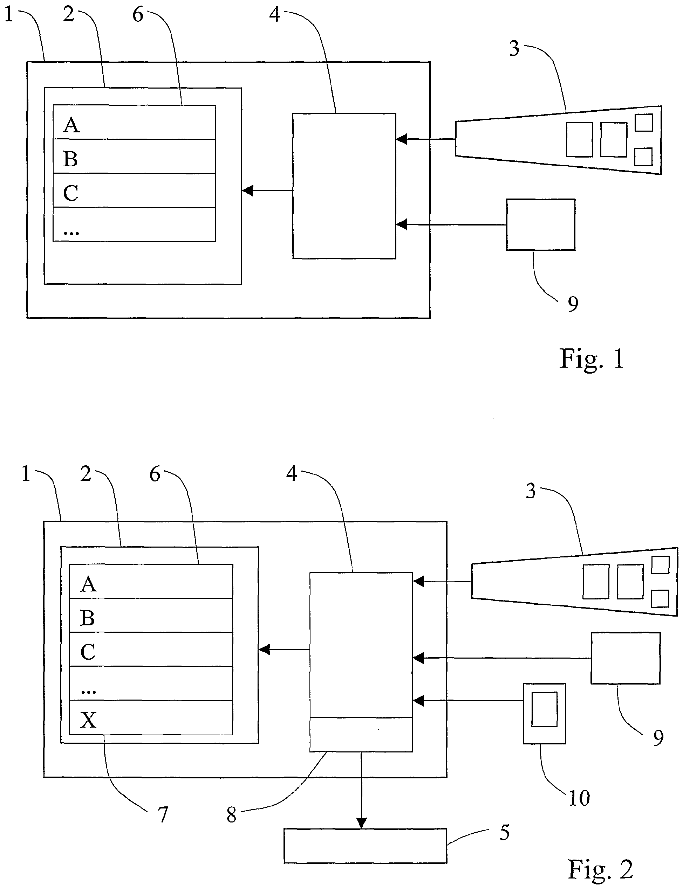

Figure 1 shows an existing combination instrument 1 comprising a display 2 and a control unit 4 integrated in the combination instrument. By a combination instrument is understood here the physical unit in which speedometer, tachometer, warning lamps, information display and various indicating instruments are located. A combination instrument is mounted in the vehicle's dashboard. A keypad 3 is connected to the control unit 4. The display 2 is used to display information of various types, for example status messages, error messages and time. It is also used to make settings via a menu system 6 with various menus. The control unit 4 contains software and logic that control the instrument. The control unit 4 also receives information from the vehicle's other control units 9 via a data bus. The keypad 3 consists here of four switches that are used to navigate the menu system. The switches represent the functions "Enter", Escape", "Up" and "Down".

In order to select a function in the menu system, the switches "Up" and "Down" are used to find the required menu. This menu is then selected using "Enter". For one function there can be several sub-menus in which different settings and selections can be made. For example, the time can be set or the operator can see the estimated remaining distance before the fuel runs out. When the function is completed, "Escape" results in a return to the immediately preceding menu.

Figure 2 shows a first embodiment of a combination instrument according to the invention. Here the menu system 6 comprises a parking heater menu 7. The control unit 4 comprises a control output 8 that controls the parking heater 5 directly. The parking heater menu 7 is selected in the menu system in the same way as described above. In the parking heater menu 7, a number of settings can be made, for example direct switching on and/or off of the parking heater 5, and times of switching the parking heater 5 on and/or off can also be programmed. The status of the programming can also be read off in the parking heater menu 7 and programmed settings can be edited or removed. The time function also contains a calendar which makes it possible to select settings dependant upon, for example, the day of the week. It is possible to program so that the heater is switched on and off several times.

In this example, the control unit 4 of the combination instrument also contains a temperature regulating function (not shown). As a result of also integrating the temperature regulation in the control unit 4 of the combination instrument, there is no need to have a separate control unit for the parking heater. As the instrument 1 receives information about both the cab temperature and the external temperature, it is in addition both cheap and simple also to integrate the temperature regulation into the combination instrument.

In the parking heater menu 7 it is therefore also possible to set the required cab temperature. It is also possible to program in one or more required cab temperatures with times. This makes it possible, for example, to have one temperature before going to bed, a lower temperature during the night and then to increase the temperature when it is time to get up again.

The instrument also contains a function that takes into account the external temperature when the temperature in the cab is to be regulated. This means that the control unit 4 can compensate, for example, for a low external temperature so that the required cab temperature can be attained more quickly.

In order to increase the convenience, some additional functions are also connected to the parking heater function. One of these makes it possible to program automatic opening and closing of, for example, windows or sunroof. This can be used, for example, to refresh the air in the cab by letting in fresh air when it is time to get up. Another function that can be programmed is an automatic starting of the cab fan. This function can be used to start the fan in order to refresh the air in the vehicle, for example for a short while before the driver comes back from lunch when the vehicle has been parked in the sun.

The combination instrument 1 also comprises a battery-saving function. This switches off most of the functions, for example speedometer, tachometer, other indication instruments and warning lamps, in the combination instrument 1 when the vehicle is shut down, that is when the ignition is switched off. In the battery-saving mode the processor can, for example, monitor the inputs at predefined intervals of time and can be idle in between. In addition, an internal timer can start the processor when required, for example when the external unit is to be activated or deactivated. The internal timer is also used as a real time clock. When, for example, the driver wants to activate the parking heater while the ignition is switched off, the processor detects that a switch in the keypad has been pressed and starts the menu system and its display. The setting can be carried out and after a predetermined time the processor returns to its idle state.

In a second embodiment of the combination instrument 1 according to the invention, an additional switch 10 is connected to the control unit 4 of the combination instrument. The additional switch 10 generates a control signal to the control unit 4. This control signal is used as an input signal to the control unit 4 and to the control unit's program. It is advantageous to let the parts of the program that are to be controlled by the switch 10 be interrupt-driven.

In this example, the additional switch 10 can be used to switch the parking heater 5 off or on from a different location in the cab. The switch 10 can, for example, be mounted in the rear wall of the cab, by the bunk. In this case, the driver can switch the parking heater 5 off or on while he is lying in bed without needing to get up. It is also possible that the adjustment of the temperature setting can be carried out externally, so that the required temperature can also be set from the bunk.

In a first further development of the second embodiment, the additional switch is used for the control of a heated rear-view mirror (not shown). The heating element in the rear-view mirror is normally switched on or off by means of a switch in the door panel, with the switch controlling the heating element in the mirror directly via a power unit, for example a relay.

In this further development, the heating element of the mirror is controlled by the control unit of the combination instrument. This can be carried out directly from the control unit or via a power unit, for example a semiconductor mounted in a suitable location. The switch is sprung, which means that it gives a signal each time it is depressed. The program sequence that controls the mirror's heating element changes the state of the output each time the switch gives a control signal. This means that the mirror's heating element can be switched off or on as normal using the switch. A diode in the switch can show whether the heating element is on or off.

Different settings can be made in a menu for the mirror's heating element. One setting that can be selected is that the mirror's heating element is to be switched on each time the vehicle is started. In another setting it is possible to select how long the heating element is to be switched on. The heating element can be set to be on continually or else an interval of time can be selected, for example 20 minutes. It is also possible to set an external temperature below which the mirror's heating element is to be switched on when the vehicle is started, for example plus 5 degrees.

In this example, the existing menu system is used to set parameters that it is not normally possible for an operator to set or change. In other cases, similar settings or changes are so complicated that they are in practice impossible to make, as the user interface is too difficult to understand. Using the combination instrument's menu system in order to make these settings therefore increases the convenience for the driver.

In a first embodiment of the method according to the invention, a parking heater is controlled by a means of control and a menu system integrated in a combination instrument. In order to control the parking heater, the menu is first selected for the function "parking heater" in the menu system. This is carried out in the traditional way using a keypad containing a number of switches, the keypad here containing four switches. This keypad can advantageously be located on any existing control stick in the vehicle, for example the indicator control stick. The required settings for the auxiliary heater are thereafter carried out in the "parking heater" menu.

One of the settings that can be carried out in the "parking heater" menu is to switch on or shut off the parking heater directly. In addition, times for switching the auxiliary heater on and off can be programmed. It is possible to program for the auxiliary heater to be switched on and off several times and it is possible to program different settings depending upon the day of the week. For example, the auxiliary heater can be set to come on at a time when a journey is to commence after an interval of several days. It is also possible to set a required temperature or to program one or more required combinations of temperature and time. This makes it possible, for example, for the driver to have one temperature in the cab in the evening before going to bed, a lower temperature during the night and then a different higher temperature when it is time to get up again.

When the required settings have been carried out, the operator returns to the main menu.

In a further development of the method, the function for activating and/or deactivating the parking heater is controlled by one or more additional switches. They can be located anywhere in the vehicle. For example, an additional switch can be mounted in the rear wall beside the bunk. In this case, for example, the driver can switch the parking heater off or on while he is lying in bed without him needing to get up.

A computer program according to the invention comprises program code for activating and/or deactivating at least one separate unit by means of a control system integrated in a combination instrument, when the program is executed by a processor integrated in the combination instrument.

The computer program according to the invention can be stored on a medium that can be read by a computer system integrated in the combination instrument. This medium can be, for example, a data diskette, a memory module, a CD or the like. This can be advantageous, for example, when the program is to be downloaded in the vehicle during production and/or when the program in the vehicle is to be updated. The updating of software can be carried out, for example, at regular servicing times or, if so required, directly by a customer. The updating of software can also be carried out via a connection, for example using the Internet, to a server in which the program is stored.

The invention is not to be regarded as being limited to the embodiments described above, but a number of additional variants and modifications are possible within the framework of the following patent claims. For example, a control system according to the invention is not necessarily connected to a display in a combination instrument, but in addition when the display for the vehicle's information system is located in a different place in the vehicle, the invention can be integrated in the existing control system.

## Claims

1. Combination instrument (1) to be mounted into a motor vehicle's dashboard the combination instrument (1) comprising at least a speedometer, a tachometer, an information display (2) for giving messages to an operator and displaying a menu system (6), a keypad (3) for receiving messages from an operator and navigating the menu system (6), and a control system (4) for controlling the combination instrument (1) and for receiving information from the vehicle's other control units (9) via a data bus,
**characterized in that**
the control system (4) further comprises a control output (8) for directly activating and/or deactivating at least one separate unit (5) whereby the said control output (8) is integrated in the combination instrument (1), and **in that** the menu system (6) further comprises at least one separate unit menu (7) for controlling the at least one separate unit (5).

2. Combination instrument as claimed in claim 1, **characterized in that** the combination instrument (1) comprises a function for programming at least one time when the separate unit (5) is to be activated and/or deactivated.

3. Combination instrument as claimed in any one of claims 1 to 2, **characterized in that** the combination instrument (1) comprises a function for setting at least one required temperature value.

4. Combination instrument as claimed in any one of claims 1 to 3, **characterized in that** the combination instrument (1) comprises a function for programming at least one combination of a required temperature value and a time.

5. Combination instrument as claimed in any one of claims 1 to 4, **characterized in that** the combination instrument (1) comprises a regulating system for temperature, the input signal for which is at least one temperature value.

6. Combination instrument as claimed in any one of claims 1 to 5, **characterized in that** the combination instrument (1) comprises a battery saving function in which subsystems in the combination instrument (1) are deactivated.

7. Combination instrument as claimed in any one of claims 1 to 6, **characterized in that** the combination instrument (1) comprises at least one additional input to which at least one additional switch (10) can be connected in order to give a control signal to the combination instrument (1).

8. Combination instrument as claimed in any one of claims 1 to 7, **characterized in that** the separate unit (5) is a parking heater.

9. Combination instrument as claimed in any one of claims 1 to 7, **characterized in that** the separate unit (5) is at least one of a heater, an air-conditioning device, an electrically-controlled window, an electrical fan or electrically heated mirror or a combination of the above.

10. Method for controlling a separate unit (5) by a combination instrument (1) for a motor vehicle's dashboard, the combination instrument (1) comprising at least a speedometer, a tachometer, an information display (2) for giving messages to an operator and displaying a menu system (6), a keypad (3) for receiving messages from an operator and navigating the menu system (6), and a control system (4) for controlling the combination instrument (1) and for receiving information from the vehicle's other control units (9) via a data bus, wherein control system (4) and thereby the combination instrument (1) further comprises a control means (8) for directly activating and/or deactivating at least one separate unit (5) and, wherein the menu system (6) comprises at least one separate unit menu (7) for controlling the at least one separate unit (5), which method comprises the steps of:
- selecting the separate unit menu (7) for controlling the separate unit (5) in the menu system (6),
- directly activating or deactivating the separate unit (5) in the said separate unit menu (7) and
- terminating the separate unit menu (7) by returning to the main menu system (6).

11. Method as claimed in claim 10, **characterized in that** the method also comprises the step of programming at last one time when the separate unit is to be activated and/or deactivated.

12. Method as claimed in claim 10 or 11, **characterized in that** the method also comprises the step of programming at least one combination of a required temperature value and a time.

13. Method as claimed in any one of claims 10 to 12, **characterized in that** the method also comprises the step of receiving a control signal from an external switch.

14. Method as claimed in any one of claims 10 to 13, **characterized in that** the separate unit is a parking heater.

15. Computer program comprising program code for carrying out all the steps in any of claims 10 to 14 when the said program is executed by a computer.

16. Computer program product comprising program code stored on a medium that can be read by computer for carrying out the method in any of claims 10 to 14 when the said program is executed by a computer.

## Patentansprüche

1. Kombinationsinstrument (1), das in ein Kraftfahrzeugarmaturenbrett zu montieren ist, wobei das Kombinationsinstrument (1) wenigstens einen Geschwindigkeitsmesser, einen Drehzahlmesser, eine Informationsanzeige (2), um Nachrichten an eine Bedienungsperson zu geben und um ein Menüsystem (6) anzuzeigen, ein Tastenfeld (3), um Nachrichten von einer Bedienungsperson zu empfangen und um das Menüsystem (6) zu navigieren, und ein Steuersystem (4) umfasst, um das Kombinationsinstrument (1) zu steuern und um Informationen von den anderen Fahrzeugsteuereinheiten (9) über einen Datenbus zu empfangen,
**dadurch gekennzeichnet, dass**
das Steuersystem (4) ferner einen Steuerausgang (8) zum direkten Aktivieren und/oder Deaktivieren wenigstens einer separaten Einheit (5) umfasst, wobei der Steuerausgang (8) in dem Kombinationsinstrument (1) integriert ist, und dass das Menüsystem (6) ferner wenigstens ein separates Einheitsmenü (7) zum Steuern der wenigstens einen separaten Einheit (5) umfasst.

2. Kombinationsinstrument nach Anspruch 1, **dadurch gekennzeichnet, dass** das Kombinationsinstrument (1) eine Funktion zum Programmieren wenigstens einer Zeit umfasst, wenn die separate Einheit (5) zu aktiveren und/oder zu deaktivieren ist.

3. Kombinationsinstrument nach einem der Ansprüche 1 bis 2, **dadurch gekennzeichnet, dass** das Kombinationsinstrument (1) eine Funktion zum Einstellen wenigstens eines erforderlichen Temperaturwerts umfasst.

4. Kombinationsinstrument nach einem der Ansprüche 1 bis 3, **dadurch gekennzeichnet, dass** das Kombinationsinstrument (1) eine Funktion zum Programmieren wenigstens einer Kombination eines erforderlichen Temperaturwerts und einer Zeit umfasst.

5. Kombinationsinstrument nach einem der Ansprüche 1 bis 4, **dadurch gekennzeichnet, dass** das Kombinationsinstrument (1) ein Reguliersystem für Temperatur umfasst, für das das Eingangssignal wenigstens ein Temperaturwert ist.

6. Kombinationsinstrument nach einem der Ansprüche 1 bis 5, **dadurch gekennzeichnet, dass** das Kombinationsinstrument (1) eine Batteriesparfunktion umfasst, bei der Untersysteme in dem Kombinationsinstrument (1) deaktiviert sind.

7. Kombinationsinstrument nach einem der Ansprüche 1 bis 6, **dadurch gekennzeichnet, dass** das Kombinationsinstrument (1) wenigstens einen zusätzlichen Eingang umfasst, mit dem wenigstens ein zusätzlicher Schalter (10) verbunden werden kann, um ein Steuersignal an das Kombinationsinstrument (1) zu geben.

8. Kombinationsinstrument nach einem der Ansprüche 1 bis 7, **dadurch gekennzeichnet, dass** die separate Einheit (5) eine Standheizung ist.

9. Kombinationsinstrument nach einem der Ansprüche 1 bis 7, **dadurch gekennzeichnet, dass** die separate Einheit (5) eine Heizung, eine Klimatisierungsvorrichtung, ein elektrisch gesteuertes Fenster, ein elektrisches Gebläse oder ein elektrisch geheizter Spiegel und/oder eine Kombination aus den obigen ist.

10. Verfahren zum Steuern einer separaten Einheit (5) durch ein Kombinationsinstrument (1) für ein Kraftfahrzeugarmaturenbrett, wobei das Kombinationsinstrument (1) wenigstens einen Geschwindigkeitsmesser, einen Drehzahlmesser, eine Informationsanzeige (2), um Nachrichten an eine Bedienungsperson zu geben und um ein Menüsystem (6) anzuzeigen, ein Tastenfeld (3), um Nachrichten von einer Bedienungsperson zu empfangen und um das Menüsystem (6) zu navigieren, und ein Steuersystem (4) umfasst, um das Kombinationsinstrument (1) zu steuern und um Informationen von den anderen Fahrzeugsteuereinheiten (9) über einen Datenbus zu empfangen, wobei das Steuersystem (4) und dadurch das Kombinationsinstrument (1) ferner eine Steuereinrichtung (8) zum direkten Aktivieren und/oder Deaktivieren wenigstens einer separaten Einheit (5) umfasst und wobei das Menüsystem (6) wenigstens ein separates Einheitsmenü (7) zum Steuern der wenigstens einen separaten Einheit (5) umfasst, wobei das Verfahren die Schritte umfasst:
- Auswählen des separaten Einheitsmenüs (7) zum Steuern der separaten Einheit (5) in dem Menüsystem (6),
- direktes Aktivieren oder Deaktivieren der separaten Einheit (5) in dem separaten Einheitsmenü (7) und
- Beenden des separaten Einheitsmenüs (7) durch Zurückkehren zum Hauptmenüsystem (6).

11. Verfahren nach Anspruch 10, **dadurch gekennzeichnet, dass** das Verfahren auch den Schritt eines Programmierens wenigstens einer Zeit umfasst, wenn die separate Einheit zu aktiveren und/oder zu deaktivieren ist.

12. Verfahren nach Anspruch 10 oder 11, **dadurch gekennzeichnet, dass** das Verfahren auch den Schritt eines Programmierens wenigstens einer Kombination eines erforderlichen Temperaturwerts und einer Zeit umfasst.

13. Verfahren nach einem der Ansprüche 10 bis 12, **dadurch gekennzeichnet, dass** das Verfahren auch den Schritt eines Empfangens eines Steuersignals von einem externen Schalter umfasst.

14. Verfahren nach einem der Ansprüche 10 bis 13, **dadurch gekennzeichnet, dass** die separate Einheit eine Standheizung ist.

15. Computerprogramm umfassend Programmcode zum Durchführen aller Schritte nach einem der Ansprüche 10 bis 14, wenn das Programm durch einen Computer ausgeführt wird.

16. Computerprogrammprodukt umfassend Programmcode, der auf einem Medium gespeichert ist, das durch einen Computer gelesen werden kann, um das Verfahren nach einem der Ansprüche 1 bis 14 auszuführen, wenn das Programm durch einen Computer ausgeführt wird.

## Revendications

1. Instrument combiné (1) devant être monté dans un tableau de bord du véhicule automobile, l'instrument combiné (1) comprenant au moins un indicateur de vitesse, un tachymètre, un dispositif d'affichage d'informations (2) pour donner des messages à un opérateur et afficher un système de menu (6), un clavier (3) pour recevoir des messages à partir d'un opérateur et naviguer dans le système de menu (6), et un système de commande (4) pour commander l'instrument combiné (1) et pour recevoir des informations à partir des autres unités de commande (9) du véhicule via un bus de données,
**caractérisé en ce que**
le système de commande (4) comprend en outre une sortie de commande (8) pour activer et/ou désactiver directement au moins une unité séparée (5), moyennant quoi ladite sortie de commande (8) est intégrée dans l'instrument combiné (1), et **en ce que** le système de menu (6) comprend en outre au moins un menu (7) d'unité séparée pour commander l'au moins une unité séparée (5).

2. Instrument combiné tel que revendiqué dans la revendication 1, **caractérisé en ce que** l'instrument combiné (1) comprend une fonction pour programmer au moins une fois le moment où l'unité séparée (5) doit être activée et/ou désactivée.

3. Instrument combiné tel que revendiqué dans l'une quelconque des revendications 1 et 2, **caractérisé en ce que** l'instrument combiné (1) comprend une fonction de réglage d'au moins une valeur de température requise.

4. Instrument combiné tel que revendiqué dans l'une quelconque des revendications 1 à 3, **caractérisé en ce que** l'instrument combiné (1) comprend une fonction de programmation d'au moins une combinaison d'une valeur de température requise et d'une durée.

5. Instrument combiné tel que revendiqué dans l'une quelconque des revendications 1 à 4, **caractérisé en ce que** l'instrument combiné (1) comprend un système de régulation de température, pour lequel le signal d'entrée est au moins une valeur de température.

6. Instrument combiné tel que revendiqué dans l'une quelconque des revendications 1 à 5, **caractérisé en ce que** l'instrument combiné (1) comprend une fonction d'économie de batterie dans laquelle des sous-systèmes de l'instrument combiné (1) sont désactivés.

7. Instrument combiné tel que revendiqué dans l'une quelconque des revendications 1 à 6, **caractérisé en ce que** l'instrument combiné (1) comprend au moins une entrée supplémentaire à laquelle au moins un commutateur supplémentaire (10) peut être relié afin de donner un signal de commande à l'instrument combiné (1).

8. Instrument combiné tel que revendiqué dans l'une quelconque des revendications 1 à 7, **caractérisé en ce que** l'unité séparée (5) est un dispositif de chauffage d'appoint.

9. Instrument combiné tel que revendiqué dans l'une quelconque des revendications 1 à 7, **caractérisé en ce que** l'unité séparée (5) est au moins l'un(e) d'un dispositif de chauffage, d'un dispositif de climatisation, d'une fenêtre à commande électrique, d'un ventilateur électrique ou d'un rétroviseur électriquement chauffé ou une combinaison de ce qui précède.

10. Procédé de commande d'une unité séparée (5) par un instrument combiné (1) pour un tableau de bord du véhicule automobile, l'instrument combiné (1) comprenant au moins un indicateur de vitesse, un tachymètre, un dispositif d'affichage d'informations (2) pour donner des messages à un opérateur et afficher un système de menu (6), un clavier (3) pour recevoir des messages à partir d'un opérateur et naviguer dans le système de menu (6), et un système de commande (4) pour commander l'instrument combiné (1) et pour recevoir des informations des autres unités de commande (9) du véhicule via un bus de données, où le système de commande (4) et ainsi l'instrument combiné (1) comprenant en outre un moyen de commande (8) pour activer et/ou désactiver directement au moins une unité séparée (5) et,
dans lequel le système de menu (6) comprend au moins un menu (7) d'unité séparée pour commander l'au moins une unité séparée (5), lequel procédé comprend les étapes consistant :
- à sélectionner le menu (7) d'unité séparée pour commander l'unité séparée (5) dans le système de menu (6),
- à activer ou désactiver directement l'unité séparée (5) dans ledit menu (7) d'unité séparée et
- à terminer le menu (7) d'unité séparée en retournant au système de menu principal (6).

11. Procédé tel que revendiqué dans la revendication 10, **caractérisé en ce que** le procédé comprend également l'étape pour programmer au moins une fois le moment où l'unité séparée doit être activée et/ou désactivée.

12. Procédé tel que revendiqué dans la revendication 10 ou 11, **caractérisé en ce que** le procédé comprend en outre l'étape de programmation d'au moins une combinaison d'une valeur de température requise et d'une durée.

13. Procédé tel que revendiqué dans l'une quelconque des revendications 10 à 12, **caractérisé en ce que** le procédé comprend en outre l'étape de réception d'un signal de commande provenant d'un commutateur externe.

14. Procédé tel que revendiqué dans l'une quelconque des revendications 10 à 13, **caractérisé en ce que** l'unité séparée est un dispositif de chauffage d'appoint.

15. Programme informatique comprenant un code de programme pour réaliser toutes les étapes dans l'une des revendications 10 à 14 lorsque ledit programme est exécuté par un ordinateur.

16. Produit de programme informatique comprenant un code de programme stocké sur un support qui peut être lu par un ordinateur pour mettre en oeuvre le procédé dans l'une des revendications 10 à 14, lorsque ledit programme est exécuté par un ordinateur.
